# EUROPÄISCHE PATENTSCHRIFT

(11) **EP 3 102 641 B1**
(45) Veröffentlichungstag und Bekanntmachung des Hinweises auf die Patenterteilung: **18.03.2020**
(21) Anmeldenummer: 14722524.7
(22) Anmeldetag: 03.02.2014
(51) Int. Cl.: C09D 7/00

(54) **FARBEN, LACKE ODER ANDERE BESCHICHTUNGSMITTEL MIT ANTI-KRATER-ADDITIV SOWIE DESSEN HERSTELLUNG UND VERWENDUNG**
PAINTS, LACQUERS OR OTHER COATING AGENTS COMPRISING AN ANTI-PIN-HOLE ADDITIVE, AND PRODUCTION AND USE OF SAID ADDITIVE
PEINTURES, LAQUES OU AUTRES AGENTS DE REVÊTEMENT CONTENANT UN ADDITIF ANTI-CRATÈRES, AINSI QUE LEUR FABRICATION ET LEUR UTILISATION

(43) Veröffentlichungstag der Anmeldung: 14.12.2016
(73) Patentinhaber: Hemmelrath Technologies GmbH, 63906 Erlenbach (DE)
(72) Erfinder: HOHMANN, Ralf, 63920 Großheubach (DE)
(74) Vertreter: Pöhner, Wilfried Anton
(86) Internationale Anmeldenummer: PCT/DE2014/100030
(87) Internationale Veröffentlichungsnummer: WO 2015/113530

(56) Entgegenhaltungen:
- DE-A1- 3 615 181
- US-A- 4 416 941

## Beschreibung

Die Erfindung bezieht sich auf Farben, Lacke oder andere Beschichtungsmittel in flüssiger Lösung, bestehend aus Bindemitteln, Pigmenten, Lösemittel, Füllstoffen und Additiven, wobei die Additive zumindest teilweise der Kraterbildung entgegen wirken, sowie dessen Herstellung und Verwendung.

Bei dem Begriff "Kieselsäure" handelt es sich um Sammelbezeichnungen für Verbindungen der allgemeinen Formel SiO₂ · nH₂O, wobei n eine natürliche Zahl ist, welche die Anzahl an chemisch gebunden H₂O-Molekühlen angibt. Klarzustellen ist, dass es sich nicht um Kristallwasser handelt, sodass die Abspaltung von H₂O nur mit Hilfe chemischer Reaktionen erfolgen kann. Eine Untermenge hiervon bilden die pyrogenen Kieselsäuren, die durch Flammenhydrolyse, also pyrogene Verfahren hergestellt werden in der Weise, dass Siliciumtetrachlorid in einer Knallgas-Flamme zersetzt wird. Aufgrund der hohen Temperaturen und der Gasphase findet eine Koagulation der monomeren Kieselsäuren statt. Bei den pyrogenen Kieselsäuren handelt es sich um hochdisperse Kieselsäuren, die eine nahezu porenfreie Oberfläche besitzen und im Vergleich zu den Fällungskieselsäuren deutlich weniger OH-Gruppen an der Oberfläche aufweisen. Ihre Hydrophilie wird bedingt durch die Silanol-Gruppen. Durch entsprechende Nachbehandlungsverfahren kann eine Umsetzung der OH-Gruppen erfolgen, sodass im Ergebnis auch pyrogene Kieselsäure mit hydrophoben d. h. wasserabstoßende Oberflächen entstehen. Nach der Literatur (Römpp Chemielexikon Thieme-Verlag) finden sich unter dem Stichwort Kieselsäure als Verwendungszwecke angegeben, Verstärkerfüllstoffe für Kautschuk, Träger für Pflanzenschutzmittel, in Siliconöl- und Mineralöl-Entschäumern, in Fugendichtungsmassen, als Rieselhilfen, zur Mattierung von Lacken, als Antiblockingmittel in Kunststoffen und als Zusätze zu Zahnpasta.

Eine der häufig auftretenden Störungen beim Auftragen von Lacken und Farben ist das Entstehen von Kratern, wobei dieser Begriff im Rahmen vorliegender Erfindung weit auszulegen ist und alle Arten von Oberflächenstörungen, seien sie nun kreisförmig oder unrund, vergleichsweise flach nach Art einer Delle oder Vertiefungen bezeichnet, die bis zum Untergrund des Lackfilmes reichen können und die einzeln oder gehäuft auftreten. Eine der häufigsten Ursachen für das Entstehen von Kratern ist das Auftreffen von Substanzen mit niedriger Oberflächenspannung auf den noch nicht gehärteten Lackfilm oder durch die spontane, lokale Freisetzung von flüchtigen Bestandteilen in einer späten Phase der Vernetzung, zu einem Zeitpunkt also, in dem die Viskosität bereits relativ hoch ist und somit der Film nicht vollständig verfließen kann. Zur Ausbildung von Kratern kann es auch dann kommen, wenn eine oder mehrere Lackkomponenten eine deutlich höhere Oberflächenspannung als der Rest der Beschichtung aufweisen. Um der Ausbildung von Kratern entgegen zu wirken, werden Additive angeboten, die im Wesentlichen die Oberflächenspannung des Lackes durch Anreicherung an der Oberfläche absenken, mit denen man eine Kontrolle der Viskosität des Lackes erreicht und Netzmittel und Lösungsmittel mit niedriger Oberflächenspannung verwendet. Es bleibt klarzustellen, dass auch andere zur Ausbildung von Kratern führende Ursachen vorliegen können, die in der unsauberen Vorbehandlung der Werkstückoberfläche aufgrund verbleibender Verunreinigungen und Fremdstoffe, aber auch durch Kontamination einzelner Lackkomponenten ihre Ursache finden können. Diese Ursachen können durch eine Verbesserung der Sauberkeit der Lackproduktion und/oder eine entsprechend gute Vorbehandlung des Werkstückes bei der Lackierung entgegen gewirkt werden.

Als Additive werden Hilfs- oder Zusatzstoffe genannt, die den Lacken und Farben in geringen Mengen zugesetzt werden, um bestimmte

Eigenschaften zu erreichen oder zu verbessern. Da der Mengenanteil des Additives an der Gesamtrezeptur sehr gering ist, beträgt sein Anteil meist weniger als 1 Prozent an der Gesamtrezeptur. Ungeachtet des geringen Mengenanteiles sind die Kosten der Additive häufig sehr hoch, was dadurch verursacht wird, dass die industrielle Herstellung der Additive aufgrund der geringen Produktionsmenge kostenintensiv ist.

Die bei der Produktion und Herstellung der Beschichtungen und Lacke auftretenden Oberflächenstörungen, wie z.B. die Kraterbildung, verlangen nach deren Auftreten aufwendige Nacharbeiten um eine glatte Oberfläche der weiteren Schichten zu erreichen. Diese Maßnahmen erschweren eine kontinuierliche Produktion, sodass es notwendig ist, die Kraterbildung zu vermeiden, sodass aufgrund der vielen möglichen Ursachen die Lösung darin gesucht wird, die Kraterbildung durch Zusatz von Additiven zu vermeiden. Auch ist es bekannt, z.B. aus der DE 43 03 787, dass man nach der Aufbringung eines Überzuges in einem Elektrotauchlack-Bad vor den weiteren Arbeitsschritten das Werkstück aus dem Bad entfernt und mit entsprechenden Lösungen, so z.B. wässrigen Polyvenylalkohollösungen, behandelt (DE 43 03 787).

Als Anti-Krater-Additiv sind chemische Verbindungen bekannt, die der Gruppe der Polyacrylatharze, Polyetherharze, Polyesterharze und Siliconharze zuzurechnen sind (DE 68925826 T2).

Die Patentschrift US 4,416,941 beschreibt ein Additiv für Beschichtungen aus Kieselsol und einer nichtionischen Fluorkohlenstoffverbindung zur Herabsetzung der Viskosität um bei Beschichtungen mit hohem Feststoffgehalt die Sprühfähigkeit zu erhöhen und die Senken- und Kraterbildungsneigung zu verringern. Die Wirkung dieses Additivs beruht jedoch nahezu vollständig auf der Fluorkohlenstoffverbindung, wie aus den in der Patentschrift erwähnten Vergleichsversuchen hervorgeht. Diese Verbindungen sind sehr kostenintensiv in der Herstellung, was den Preis des gesamten Additivs entsprechend in die Höhe treibt.

Die Offenlegungsschrift DE 3615181 A1 beschreibt ein Verfahren zur Herstellung eines Farbanstrich aus einem Polymer als Bindemittel, einem kompatiblen Lösungsmittel, einem Oberflächenaktivmittel, pyrogener Kieselsäure, einem Montmorillonit-Quartärammoniumsalz und einem Pigment bei dem eine Blasenbildung während des Aushärtens verringert ist, wodurch der Bildung von Kochern und anderen beim Aushärten durch übermäßig rasches Entweichen des Lösungsmittels verursachten Lackierfehlern vorgebeugt wird. Über eine Verminderung der Neigung des Farbanstriches zur Bildung von Kratern, bei Verunreinigung des Substrates mit aus Schmierölen und Fetten stammenden Silan- und Silanolverbindungen ist nichts erwähnt.

Hiervon ausgehend hat sich die Erfindung das Auffinden eines Additivs für Farben, Lacken und Beschichtungsmittel in flüssiger Phase zur Vermeidung der Kraterbildung zur Aufgabe gemacht, das vergleichsweise kostengünstig auf dem Markt erworben werden kann. Ebenso ist Gegenstand der Erfindung die Herstellung und das Auftragen auf das Werkstück.

Gelöst wird diese Aufgabe dadurch, dass als Anti-Krater-Additiv hydrophile pyrogene Kieselsäure verwendet wird.

Die wesentliche Leistung der Erfindung besteht darin, dass erstmalig aufgefunden wurde, dass eine auf dem Markt befindliche und bekannte Substanz zu Zwecken der Anti-Kraterbildung einsetzbar ist. Aus den bisherigen, aus dem Stande der Technik bekannten Verwendungszwecken gibt es keine Hinweise darauf, bei Lacken und Beschichtungen Anti-Krater bildend zu wirken. Ein weiterer, wesentlicher Vorteil ist, dass die beanspruchte Substanz im Vergleich zu anderen bekannten Anti-Krater-Mitteln kostengünstig zur Verfügung steht.

Der Begriff "Lack" soll im Sinne der Erfindung weit gefasst werden und auch die üblicherweise mit "Farbe" bezeichneten Lacke umfassen, die sich dadurch auszeichnen, dass Pigmentfarbstoffe beigegeben sind. Der im Sinne der Erfindung als Oberbegriff verwendete "Lack" umfasst zusätzlich auch jene Verbindungen, die frei von Farbpigmenten sind, also klar und/oder farblos sind. Auch andere Beschichtungsmittel sind hierunter zu subsumieren.

Die Zugabe des Additives zu den Farben, Lacken und Beschichtungsmitteln erfolgt in der Weise, dass das Additiv bei der Herstellung dem Lack und Beschichtungsmittel in üblicher Weise eindispergiert wird. Gleichermaßen erfolgt das Auftragen des erfindungsgemäßen Lackes in der üblichen Weise, sodass auch hier keine beverwendete "Lack" umfasst zusätzlich auch jene Verbindungen, die frei von Farbpigmenten sind, also klar und/oder farblos sind. Auch andere Beschichtungsmittel sind hierunter zu subsumieren.

Die Zugabe des Additives zu den Farben, Lacken und Beschichtungsmitteln erfolgt in der Weise, dass das Additiv bei der Herstellung dem Lack und Beschichtungsmittel in üblicher Weise eindispergiert wird. Gleichermaßen erfolgt das Auftragen des erfindungsgemäßen Lackes in der üblichen Weise, sodass auch hier keine besonderen Nachteile und Vorsichtmaßnahmen zu treffen sind. Im Ergebnis stehen die sowohl bei der Herstellung, als auch Anwendung vorzunehmenden Verfahrensschritte denjenigen aus dem Stande der Technik gleich, so dass keine nachteiligen Folgen zu erwarten sind.

Das erfindungsgemäß vorgeschlagene Additiv ist für ein breites Gebiet an Anwendungen einsetzbar. Die erfindungsgemäß vorgeschlagene Rezeptur hat als Voraussetzung für deren Applikation die flüssige Phase d. h. die Rezeptur liegt in einer durch Lösungsmittel gebildeten Phase vor. Dabei umfasst deren Begriff "Lösungsmittel" im Sinne der Erfindung alle in der Applikation unbedenklichen Lösungsmittel und insbesondere auch Wasser.

In einer weiteren, zweckmäßigen Ausgestaltung wird vorgeschlagen, dass die mittlere spezifische Oberfläche (BET) 100-300 m²/g beträgt. Der angegebene Wertebereich bezieht sich demnach auf die massenbezogene (und nicht volumenbezogene) spezifische Oberfläche und wird durch eine der üblichen Methoden der Oberflächenmessung bestimmt. Bekanntlich hängen alle chemischen Reaktionen wesentlich davon ab, wie groß die Angriffsfläche der Reaktionspartner im Vergleich zum Volumen ist, sodass der inneren Oberfläche in reaktiver Hinsicht eine große Bedeutung zukommt.

Besonders bevorzugt ist das Anti-Krater-Additiv mit einer Korngröße zwischen 5 - 100 nm einzusetzen. Da die Reaktionseigenschaften in erheblichem Ausmaß von der Korngröße abhängen, wurde dieser Wertebereich als vorteilhaft erkannt. Ein gewisser Zusammenhang besteht zur spezifischen Oberfläche, wobei es durch die Gestalt des einzelnen Kornes (Kugelform, zerklüftete Oberfläche) zu Abweichungen kommen kann.

Eingangs wurde erläutert, dass sich die gesamte Anzahl der Kieselsäure durch die chemische Formel SiO₂ nH₂O beschreiben lässt, wobei n eine natürliche Zahl ist. Damit werden SiO₂-Verbindungen beschrieben, deren Anteil an Wasser unterschiedlich ist. Aus der Vielzahl der Verbindungen, die sich bei wechselnden n ergeben, sind aufgrund und bedingt durch die pyrogene Herstellung, d.h. die hohe Temperatur beim Herstellungsverfahren, die niedrigzahligen natürlichen n, insbesondere n aus dem Intervall 0 bis 2 überwiegend vorhanden. Die verwendete Kieselsäure stellt regelmäßig ein Gemisch aus Komponenten unterschiedlicher chemischer Zusammensetzung dar.

Zur Verwendung und Beigabe des vorgeschlagenen Anti-Krater-Additives zu den Lackrezepturen bestehen grundsätzlich zwei verschiedene Möglichkeiten.
Im ersten Fall wird der Lackrezeptur bei der Herstellung das Additiv beigegeben, ohne dass ein Zusammenhang mit der späteren Anwendung gegeben ist. Die Beigabe des Additives erfolgt also prophylaktisch und wird auch all jenen Lackrezepturen beigegeben, bei denen in der späteren Anwendung die Formulierung eines Anti-Krater-Additives aufgrund des vorteilhaften und günstigsten Beschaffenheitszustandes und der Reinheit der Oberfläche, auf der der Lack später aufzutragen ist, nicht erforderlich wäre. Unter wirtschaftlichen Gesichtspunkten könnte dies als Nachteil aufgefasst werden.

In einer alternativen Verwendung erfolgt zunächst, d.h. vor Aufbringung der endgültigen Lackschicht, ein Auftragen und Anwendung der Lackrezeptur ohne Anti-Krater-Additive auf das Werkstück, um hierbei zu überprüfen, ob und inwieweit es zur Ausbildung von Kratern kommt. Ist die Qualität der Lackoberfläche bereits zufriedenstellend, wird auf die Beimischung des Additives verzichtet. Führt die Prüflackierung jedoch zum Ergebnis mangelnder Oberflächenqualität, wird der Lackrezeptur eine entsprechende Menge des Anti-Krater-Additivs beigemischt. Erst dann folgt das Aufbringen des Lackes auf das Werkstück. Der Vorteil dieser Vorgehensweise besteht darin, dass dann und nur dann, wenn das Anti-Krater-Additiv notwendig ist, die Zugabe erfolgt, was unter wirtschaftlichen Gesichtspunkten als Vorzug zu werten ist. Die individuelle Anpassung und Einstellung auf das konkrete Werkstück durch eine vorgeschaltete Prüflackierung bedeutet eine Berücksichtigung der in der Regel durch Kontamination bedingten Kraterbildung auf jeden einzelnen Anwendungsfall. Dabei ist neben der Klärung der Frage "Zugabe des Anti-Krater-Additivs Ja/Nein" auch die Höhe der Dosierung ermittelbar, so dass bei ausgeprägter Kraterbildung eine hohe Dosis und bei geringer Kraterbildung eine dementsprechend geringere Menge hinzugefügt werden kann. Der Möglichkeit der individuellen Anpassung an das konkrete Werkstück steht der Aufwand der Durchführung einer Prüflackierung gegenüber, die sich aufgrund der in vielen Fällen bereits jetzt schon routinemäßig durchgeführten Prüflackierung bzw. der hierbei hergestellten Prüfoberflächen relativiert.

Die Gewichtsanteile des Anti-Krater-Additives lassen sich letztlich von der Art und Weise der konkreten Anwendung bestimmen bzw. hierauf einstellen und bewegen sich in der Größenordnung von etwa einem Gewichtsprozent.

Bei dem erfindungsgemäßen Additiv handelt es sich um ein Pulver, das der Lackrezeptur beigegeben werden kann. Das Einbringen in die Lackrezeptur aber auch die angestrebte Dosierung erweisen sich in der Praxis häufig als schwierig. Bei direkter Einbringung des Pulvers muss sowohl ein Benetzen als auch ein Dispergieren des Pulvers vorgenommen werden, bevor die eigentliche Einarbeitung erfolgen kann. Dies stellt erhöhte Anforderungen und verkompliziert das direkte Einbringen des pulverförmigen Materials.

Aus diesem Grunde wird ausgehend vom Pulver zunächst eine Suspension in pastenförmigen Konsistenz hergestellt und dieser Paste erst anschließend der Lackrezeptur beigegeben. Die Paste ist somit der Träger des weiterhin allein den Wirkstoff darstellenden Anti-Krater-Additives.
Der Vorteil der Anwendung der Paste besteht in der Möglichkeit der genaueren Dosierung und auch der Möglichkeit des leichteren Einarbeitens in die Lackrezeptur. Der Vorteil der Anwendung der Paste besteht auch darin, dass die aktive Substanz, nämlich das Additiv, bereits benetzt und dispergiert ist und deshalb leichter in den Lack eingebracht werden kann.

Die Verwendung des erfindungsgemäß vorgeschlagenen Additives ist immer dann angezeigt, wenn es durch Störungen der Oberflächenspannung zu Ausbildungen von Kratern nach dem Auftragen auf dem Werkstück kommt. Die Ursachen für die Entstehung und Beeinflussung der Oberflächenspannung sind vielfältig. Als besonders bevorzugt wird angesehen, die erfindungsgemäß mit dem Anti-Krater-Additiv versehene Lackrezeptur dann anzuwenden, wenn auf der Oberfläche des Werkstückes Silan- oder Silanol-Verbindungen vorhanden sind. Gerade diese Gruppe von Verbindungen ist herrührend von Verunreinigungen seitens der eingesetzten Maschinen durch Schmiermittel und Fette sehr häufig und hier hat sich die Anwendung des erfindungsgemäßen Anti-Krater-Additives als besonders wirksam erwiesen. Die Silan- und Silanol-Verbindungen beeinflussen die Oberflächenspannung in der Weise, dass es zu einer Spreizung der Lackoberfläche und damit zur Ausbildung eines Kraters kommt. Klarzustellen ist, dass die Ausbildung von Kratern auch durch Stoffe anderer chemischer Strukturen ausgelöst werden kann und nicht zwingend durch Silan- und Silanolverbindungen.

Grundlegend ist, dass die Verwendung der mit dem erfindungsgemäßen Anti-Krater-Additiv versehenen Lackrezepturen für alle Arten von Lackauftragsverfahren eingesetzt werden können, ohne dass es hier zu Einschränkungen jedweder Art kommt. Die erfindungsgemäßen Lackrezepturen sind geeignet für Ein- und Mehrschichtlackierungen, aber auch für Elektrotauchlackierung. Das Auftragen des Lackes bei den verschiedenen Verfahren geschieht nach dem aus dem Stande der Technik bekannten Verfahren ohne dass es der Berücksichtigung besonderer, auf das Anti-Krater-Additiv zurückzuführende Maßnahmen bedarf.

## Patentansprüche

1. Verwendung von hydrophiler pyrogener Kieselsäure als Anti-Krater Additiv in Farben, Lacken oder anderen Beschichtungsmitteln in flüssiger Lösung, bestehend aus Bindemitteln, Pigmenten, Lösemitteln, Füllstoffen und Additiven bei auf der Oberfläche des Werkstückes vorhandenen Silan- oder Silanolverbindungen.

2. Verwendung_nach Anspruch 1, **dadurch gekennzeichnet, dass** hydrophile pyrogene Kieselsäure mit einer spezifischen Oberfläche von 100-300 m²/g eingesetzt wird.

3. Verwendung_nach Anspruch 1 oder 2, **dadurch gekennzeichnet, dass** hydrophile pyrogene Kieselsäure mit einer Korngröße zwischen 5 - 100 nm verwendet wird.

4. Verwendung_nach einem der vorhergehenden Ansprüche, **dadurch gekennzeichnet, dass** Kieselsäure SiO_{2.} nH₂O mit einer natürlichen Zahl n aus dem Intervall 0 bis 2ausgewählt wird.

5. Verfahren_zur_Herstellung von Farben, Lacken und Beschichtungen in flüssiger Phase mit Anti-Krater-Eigenschaften, **dadurch gekennzeichnet, dass** hydrophile pyrogene Kieselsäure als Anti-Krater-Additiv eindispergiert wird.

6. Verfahren nach Anspruch 5, **dadurch gekennzeichnet, dass** das pulverförmige Anti-Krater-Additiv zuerst durch Suspension in einer Flüssigkeit in eine pastenförmige Konsistenz überführt und anschließend in der Farbe, den Lack oder dem anderen Beschichtungsmittel eindispergiert wird.

7. Verfahren zum Auftragen von Farben, Lacken und anderen Beschichtungsmittel auf Werkstücke zum Erhalt einer kraterfreien Oberfläche, **dadurch gekennzeichnet, dass**
vor dem Auftragen auf das Werkstück zu Prüfzwecken die Farbe, der Lack und anderen Beschichtungsmittel ohne Anti-Krater-Additiv auf das Werkstück aufgetragen, und entweder im Falle der Ausbildung einer glatten Oberfläche die-Farbe, der Lack oder das andere Beschichtungsmittel appliziert wird, oder
- im Falle der Ausbildung von Kratern dem Lack, der Farbe oder dem anderen Beschichtungsmittel als Anti-Krater-Additiv hydrophilepyrogeneKieselsäure vor dem Auftragen beigegeben wird, und
- anschließend das Auftragen erfolgt.

8. Verfahren nach Anspruch 7, **dadurch gekennzeichnet, dass** die beigegebene Dosis des Anti-Krater-Additivs bei starker Kraterbildung größer ist als bei geringer Kraterbildung.

## Claims

1. Use of hydrophylic pyrogenic silica as anti-pinhole additive in paints, lacquers or other coating materials in a liquid solution, consisting of binders, pigments, fillers and additives if silane or silanol compounds are present on the surface of the workpiece.

2. Use according to claim 1, **characterized in that** the hydrophilic pyrogenic silica with a specific surface of 100-300 m²/g is used.

3. Use according to claim 1 or 2, **characterized in that** hydrophilic pyrogenic silica with a particle size between 5 - 100 nm is used.

4. Use according to one of the preceding claims, **characterized in that** silica SiO_{2.} nH₂O with a natural numberl n from the intervall 0 bis 2 is selected.

5. Method for the manufacturing of paints, lacquers and coating materials in the liquid phase with anti-pinhole properties, **characterized in that** hydrophilic pyrogenic silica is dispersed in as an anti-pinhole additive.

6. Method according to claim 5, **characterized in that** the powdery anti-pinhole additive is, through suspension in a liquid, transformed into a pasty consitency and subsequently dispersed into the paint, lacquer or other coating material.

7. Method for the application of paints, lacquers or other coating materials to workpieces in order to obtain a pinhole-free surface, **characterized in that**
- before the application, the paint, lacquer or other coating material is, for testing purposes, applied to the workpiece without anti-pinhole additive, and
- either, in case a smooth surface is formed, the paint, lacquer or other coating material is applied, or
- in the case of pinhole formation, hydrophilic pyrogenic silica is added to the paint, lacquer or other coating material before it is applied, and
- subsequently the application takes place.

8. Method according to claim 7, **characterized in that** the added dosage of the anti-pinhole additive is greater for more pronounced pinhole formation than for less pronounced pinhole formation.

## Revendications

1. Utilisation de silice pyrogénée hydrophile en tant qu'additif anti-cratères dans les peintures, vernis ou autres agents de revêtement en solution liquide, consistant en liants, pigments, solvants, charges et additifs dans les composés de silane ou de silanole présents à la surface de la pièce à usiner.

2. Utilisation selon la revendication 1, **caractérisée par le fait que** la silice pyrogénée hydrophile est utilisée avec une surface spécifique de 100 à 300 m²/g.

3. Utilisation selon la revendication 1 ou 2, **caractérisée par le fait que** la silice pyrogénée hydrophile est utilisée avec une granulométrie comprise entre 5 et 100 nm.

4. Utilisation selon une des revendications précédentes, **caractérisée par le fait que** la silice SiO_{2.} nH₂O est choisie avec un nombre naturel n compris dans l'intervalle 0 à 2.

5. Procédé destiné à fabriquer des peintures, vernis et revêtements en phase liquide avec des propriétés anti-cratères, **caractérisé par le fait que** la silice pyrogénée hydrophile est dispersée en tant qu'additif anti-cratères.

6. Procédé selon la revendication 5, **caractérisé par le fait que** l'additif anti-cratères sous forme de poudre est d'abord transformé en une consistance pâteuse par suspension dans un liquide et ensuite dispersé dans de la peinture, du vernis ou autre agent de revêtement.

7. Procédé destiné à appliquer sur des peintures, des vernis et autres agents de revêtement sur des pièces à usiner afin d'obtenir une surface sans cratères, **caractérisé par le fait que**
- avant l'application sur la pièce à usiner, la peinture, le vernis et autres agents de revêtement sont appliqués sur la pièce à usiner sans additif anti-cratères à des fins de test, et que
- la peinture, le vernis ou autres agents de revêtement sont appliqués si la surface qui se forme est lisse, ou bien
- de la silice pyrogénée hydrophile est adjointe avant l'application en tant qu'additif anti-cratères si des cratères se forment sur le vernis, la peinture ou tout autre agent de revêtement,
- l'application étant réalisée ensuite.

8. Procédé selon la revendication 7, **caractérisé par le fait que** la dose adjointe de l'additif anti-cratères est plus importante si le cratère formé est important que si le cratère formé est minime.
